# EUROPEAN PATENT SPECIFICATION

(11) **EP 1 621 801 B1**
(45) Date of publication and mention of the grant of the patent: **24.09.2008**
(21) Application number: 05016447.4
(22) Date of filing: 28.07.2005
(51) Int. Cl.: F16H 59/02, B60K 20/02

(54) **Shift lever with switch for vehicular automatic transmission**
Schalthebel mit Schalter für Fahrzeug-Automatikgetriebe
Levier de changement de vitesse avec interrupteur pour transmission automatique véhiculaire

(30) Priority: 29.07.2004 JP 2004221069
(43) Date of publication of application: 01.02.2006
(73) Proprietor: FUJI KIKO Co., Ltd., Kosai-shi, Shizuoka 431-0431 (JP)
(72) Inventor: Shioji, Norihito, Kosai-shi Shizuoka 431-0431 (JP)
(74) Representative: Grünecker, Kinkeldey, Stockmair & Schwanhäusser Anwaltssozietät

(56) References cited:
- EP-A- 0 739 779
- GB-A- 2 316 815
- US-A- 5 727 423
- US-A- 6 038 937

## Description

### BACKGROUND OF THE INVENTION:

### Field of the invention

The present invention relates to an assembly structure of a shift knob of a shift lever of an automatic transmission to be assembled onto an instrument panel of an automotive vehicle or a center console thereof.

### Description of the related art

A Japanese Patent Application First Publication No. 2002-301949 published on October 15, 2002 exemplifies a previously proposed shift lever for the vehicular automatic transmission. This previously proposed shift lever includes: a shift knob having a knob cover inserted into a shift lever main body constituted by a pipe having a predetermined length; and a knob integrally molded with the knob cover and mounted on a top portion of the shift lever. A knob button is installed on the knob. In addition, the knob cover penetrates a slide plate inside of the indicator and extended to a lever base portion. An O/D (overdrive) switch is installed on a part of knob cover located in the vicinity to the knob. A harness of the knob cover is extended along the knob cover and is exposed to its lower end portion of knob cover. A terminal of the harness is inserted into its socket portion installed on the lever base portion to make an electrical conduction with a predetermined electric equipment.

In the previously proposed shift lever described above, terminals of a harness connected to the O/D switch are inserted into a socket portion of a lever base portion located at a lower side of the slide plate which is an inside of the indicator. When assembling the shift lever, a knob cover is inserted into the shift lever main body constituted by the pipe through its upper portion and a lower end portion of the knob cover is fitted into a gap hole of an outer peripheral portion of the shift lever main body of a slide plate through which the shift lever is already penetrated, Thereafter, the terminals of the harness is needed to be inserted into the socket portion. Hence, at this time, since the gap hole of the outer peripheral portion of the shift lever main body cannot visually be recognized, the lower end portion of the knob cover is satisfactorily fitted into the gap hole so that the slide plate would be damaged. Hence, an accuracy of an assembly of the shift lever onto the automotive vehicle is reduced.

US 5 727 423 A discloses a shift lever for an automatic transmission comprising a shift lever main body including a knob cover, the knob cover including a socket portion exposed to an outside of the knob cover, and a knob onto which at least one wire terminal is attached, the wire terminal being engaged with the socket portion and being exposed to an outside thereof, the knob being attached onto the shift lever main body to cover the socket portion of the knob cover, wherein the knob cover is provided with an axial hole through which the shift lever main body is inserted into the inside of the knob cover.

EP-A-0739779 discloses a shift lever for an automatic transmission, comprising a shift knob Including a handle and a pipe-like knob section penetrating through a slide plate. The handle and the pipe-like knob section are integrally formed with each other. At the inside of the pipe-like knob section, a knob skeleton frame is provided supporting two signal lines connected to an overdrive switch and extending to a lower end of the pipe-like knob section. A harness holder holds a harness connector including a socket at the front end thereof. US 6,038,937 A discloses a shift lever for an automatic transmission comprising a shift lever main body, a knob cover including a socket portion exposed to an outside of the knob cover and an axial hole through which the shift lever main body is inserted. The knob cover is provided with an axial hole through which the shift lever main body is inserted, wherein said socket portion is arranged inside said axial hole. A knob is provided onto which at least one wire terminal is attached. The wire terminal being engaged with the socket portion is exposed to an outside thereof and attached onto the shift lever main body to cover the socket portion of the knob cover.

### Summary of the invention:

It is an object of the present invention to provide an improved shift lever of an automatic transmission which is compact, highly accurate in its assembly and is simple in construction, and to provide a method applicable thereto.

This object is solved by the features of claims 1 and 9, respectively.

Further embodiments are laid down in the subclaims.

### BRIEF DESCRIPTION OF THE DRAWINGS:

Fig. 1 is a perspective view of a shift lever of a preferred embodiment according to the present invention.

Fig. 2 is a longitudinally cross sectioned view of the shift lever shown in Fig. 1.

Fig. 3 is a longitudinally cross sectioned view of an essential part of the shift lever shown in Fig. 1.

Fig. 4 is a partially omitted perspective view of the shift lever in the preferred embodiment according to the present invention.

### DETAILED DESCRIPTION OF THE PREFERRED EMBODIMENT:

Reference will hereinafter be made to the drawings in order to facilitate a better understanding of the present invention.

An assembly structure of a shift knob of a shift lever in a preferred embodiment according to the present invention is such that a knob cover having a socket portion exposed to an upper end portion is separated from a knob having at least one terminal engaged with the socket portion and projected from a lever end surface of the wire terminal.

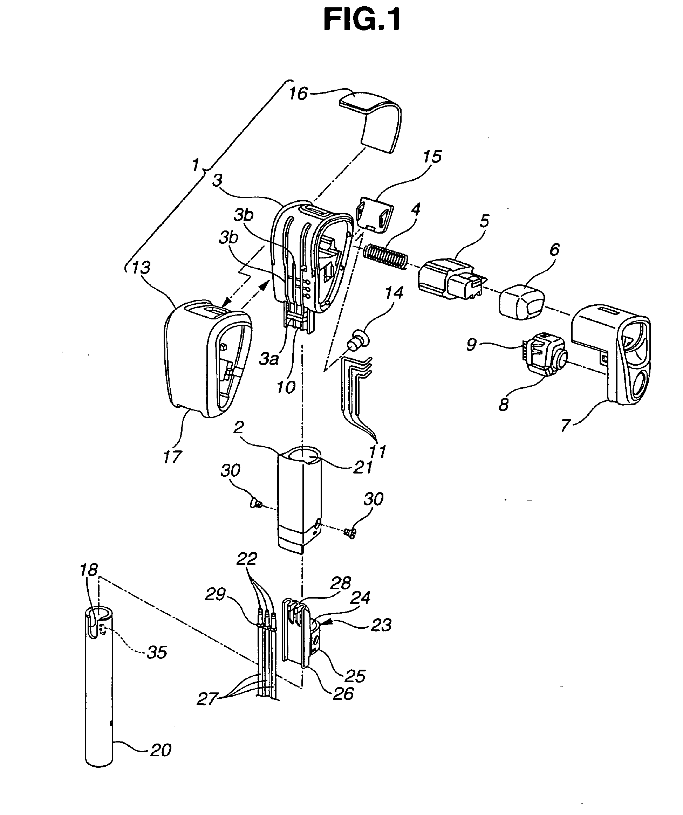

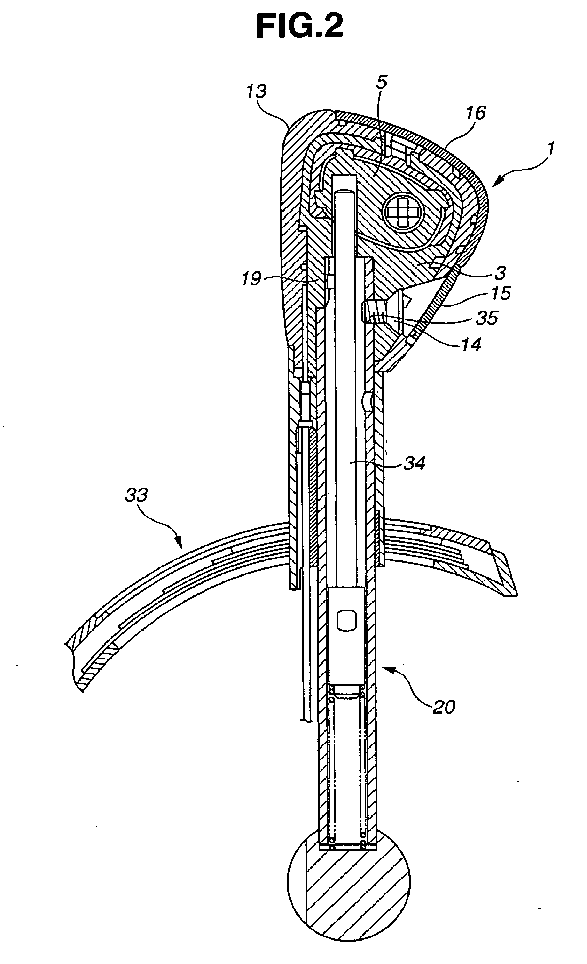

Figs. 1 through 3 show a preferred embodiment of the shift lever for an automatic transmission according to the present invention. Fig. 1 is an exploded perspective view of the shift lever in the preferred embodiment according to the present invention. As shown in Fig. 1, knob 1 is separated from knob cover 2. That is to say, knob 1 includes a frame 3 constituted by a rigid resin. A spring 4, a knob button 5, and a button cap 6 are inserted into a cavity portion whose one side is closed. A finisher 7 is closed with the other side of frame 3. In this finisher 7, a switch 8 is assembled for switching the O/D (overdrive). Terminals 9 of this switch 8 are fixed along a vertical direction of this switch 8, as shown in Fig. 1. Terminals 9 of this switch 8 are connected to wire terminals 11 fixed on frame 3 by inserting these wire terminals 11 into holes formed with a rib 3a of an engagement convex portion 10 integrally formed on a lower portion of frame 3. These holes are linked with grooves 3b formed on an outer surface of frame 3. The assembly of wire terminals 11 onto frame 3 may be carried out by inserting wire terminals 11 into grooves formed with rib 3a (rib 3a is formed in a multi-groove shape) from above and may be fixed by molding a skin body 13 as will be described later.

Skin body 13 formed of a rubber or a soft resin is attached onto the outer surface of frame 3. Hence, wire terminals 11 are firmly fixed onto frame 3 by grasping it with both of frame 3 and skin body 13. A lower end portion of each wire terminal 11 is a free end. A maintenance hatch 15 made of a rigid resin or so forth is attached onto a front end side of skin body 13 to hide a head portion of a knob fixing screw 14 to be screwed onto shift lever main body 20. In addition, a panel 16 made of the rigid resin or so forth is attached onto an upper surface of skin body 13.

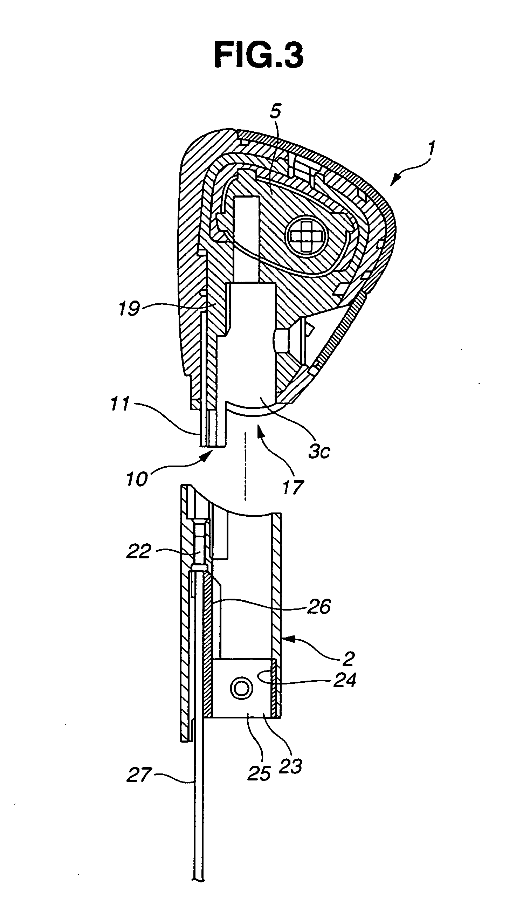

It is noted that an opening 17 is formed on a lower surface of skin body 13 and an engagement convex portion 10 is projected from opening 17. This engagement convex portion 10 encloses a part of each wire terminal 11 which is projected from the lower portion of frame 3 and prevents wire terminals 11 from being deformed. An opposite side of a part of engagement convex portion 10 enclosing wire terminals 11 is formed in an arc shape. When the engagement convex portion 10 is fitted to knob cover 2, engagement convex portion 10 serves to guide so that positions of each wire terminal 11 and of each socket 22 are mutually coincident with each other. As shown in Fig. 3, a hole 3c is formed on frame 3 to fit an upper end portion of shift lever main body 20 into by a predetermined length. A positioning convex portion 19 which is engaged with a cutout portion 18 formed on the upper end portion of shift lever main body 20 is formed on a bottom portion of hole 3c.

On the other hand, knob cover 2 is an exterior part made of a synthetic resin in a form of a cylindrical body and is provided with an axial hole 21 into which shift lever main body 20 formed with a pipe through which a compression rod 34 is inserted. An upper end surface of knob cover 2 is formed in a bend shape having a curvature which is the same as a lower surface of frame 3 to support stably the lower surface of knob 1. A harness lock plate 23 in which sockets 22 having a flexible harness (or cables) 27 are mounted is inserted into an inside of knob cover 2.

Harness lock plate 23 includes an annular body 25 having substantially the same cross sectional shape as the cross sectional shape of axial hole 21 and having a penetrated hole 24 through which shift lever main body 20 is inserted and a harness holding portion 26 located at a side portion of annular body 25, formed in a groove shape, and having a predetermined height. Annular body 25 is integrally formed with harness holding portion 26. Sockets 22 are held on harness holding portion 26 by fitting sockets 22 into fitting grooves 28 formed on harness holding portion 26 in, for example, three rows in a longitudinal direction as viewed from Fig. 1. A stopper portion 29 is formed on a lower portion of each socket 22 and an upper end portion of harness 27. This harness lock plate 23 is fixed onto shaft lever main body 20 together with knob cover 2 by means of screws 30, 30. This fixing method may be carried out by means of pawls other than screws or, alternatively, a press fit.

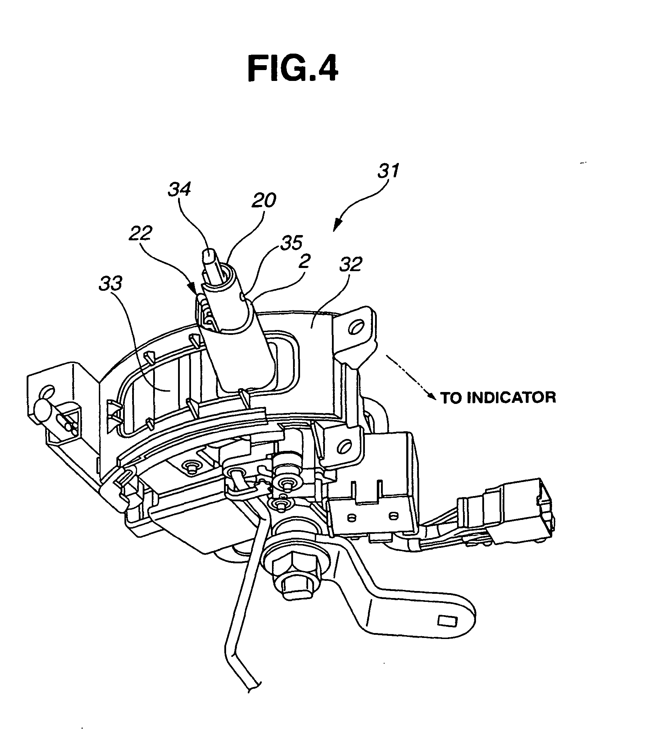

As shown in Fig. 4, shift lever 31 is shipped to an automotive vehicle manufacturing factory as a substantial finished product with knob 1 attached onto knob cover 2. Therefore, knob cover 2 is already attached onto shift lever main body 20 inserted through a slide plate 33 of a slid casing 32. Sockets 22 are exposed from the upper end surface of knob cover 2. Hence, sockets 22 can visually be recognized.

Hence, after shift lever 31 is assembled within the indicator of the vehicular instrument panel or the vehicular center console at the automotive vehicle manufacturing factory, knob 1 is attached onto the upper end portion of knob cover 2 projected from the indicator.

At this time, when engagement convex portion 10 of knob 1 is brought a face to face with harness holding portion 26 which can visually be recognized from the upper end surface of knob cover 2 and pressed down, the lower end portions of wire terminals 11 is fitted into sockets 22 so as to be electrically connected to each other and the lower surface of knob 1 is contacted with the bend surface of the upper end surface of knob cover 2. The upper end portion of shift lever main body 20 is inserted into hole 3c of knob 1. An upper end portion of compression rod 34 is contacted against an oblique surface portion formed on a knob button 5.

When knob fixing screw 14 is fixed onto screw hole 35 located at the upper end of shift lever main body 20 from frame 3 with maintenance hatch 15 opened, the assembly of shift lever 31 onto the indicator of the vehicular instrument panel or center console ended.

It is noted that knob button 5 is used to move compression rod 34 of shift lever main body 20 in a downward or biased position direction according to a presence or absence of a press operation of a button portion thereof.

## Claims

1. A shift lever for an automatic transmission, comprising:
a shift lever main body (20) penetrated through a slide plate (33) and including a knob cover (2) penetrated through the slide plate (33), the knob cover (2) including a socket portion (22) exposed to an outside of the knob cover (2), and
a knob (1) onto which at least one wire terminal (11) is attached, the wire terminal (11) being engaged with the socket portion (22) and being exposed to an outside thereof, the knob (1) being attached onto the shift lever main body (20) to cover the socket portion (22) of the knob cover (2), wherein
the knob cover (2) is provided with an axial hole (21) through which the shift lever main body (20) is inserted into the inside of the knob cover (2), a harness lock plate (23) to hold the socket portion (22) being totally inserted and fixed in said axial hole (21),
the harness lock plate (23) comprising an annular body (25) arranged at an opposite side to fitting grooves (28) for the respective socket portions (22) via a harness holding portion (26) and having a penetrating hole (24) of the same cross sectional shape as that of the axial hole (21) of the knob cover (2) through which the shift lever main body (20) is penetrated.

2. A shift lever for an automatic transmission as claimed in claim 1, **characterized in that** the socket portion (22) is exposed to an upper direction with respect to the knob cover (2) and a free end of the wire terminal (11) is projected from the knob (1) to engage with the socket portion (22) of the knob cover (2).

3. A shift lever for an automatic transmission as claimed in either claim 1 or 2, **characterized in that** the socket portion (22) comprises a plurality of socket portions (22) and the wire terminal (11) comprises the same number wire terminals (11) as the socket portions (22).

4. A shift lever for an automatic transmission as claimed in one of claims 1 to 3, **characterized in that** the annular body (25) is formed along a periphery of the axial hole (21) of the knob cover (2).

5. A shift lever for an automatic transmission as claimed in claim 3 or 4, **characterized in that** stoppers (29) are attached onto boundaries between respective socket portions (22) and harness portions (27) connected to the respective socket portions (22) and onto the harness holding portion (26).

6. A shift lever for an automatic transmission as claimed in one of claims 3 to 5, **characterized in that** the knob (1) comprises a frame (3) having an engagement convex portion (10) on which a plurality of holes formed on a rib (3a) and through which a plurality of wire terminals (11) are inserted, the respective wire terminals having one ends connected to terminals (9) of an Over-drive switch (8) and having the other ends inserted into respective socket portions (22) attached onto the fitting grooves (28) of the harness holding portion (26).

7. A shift lever for an automatic transmission as claimed in claim 6, **characterized in that** the engagement convex portion (10) is projected from an opening (17) of a skin body (13) of the knob (1) when the respective wire terminals (11) extended along respective grooves (3b) formed on the frame (3) are inserted into the respective socket portions (22) fitted into the respective fitting grooves (28).

8. A shift lever for an automatic transmission as claimed in claim 7. **characterized in that** the frame (3) of the knob (1) comprises a cavity portion, one side thereof being closed, into which a spring (4), a knob button (5) to be engaged with a compression rod (34) of the shift lever main body (20), and a button cap (6) are inserted, the other side of the cavity portion being closed with a finisher (7).

9. A method applicable to a shift lever for an automatic transmission, comprising:
providing a shift lever main body (20) penetrated through a slide plate (33) and including a knob cover (2) penetrated through the slide plate (33), the knob cover (2) including a socket portion (22) exposed to an outside of the knob cover (2) and an axial hole (21);
providing a harness lock plate (23) to hold the socket portion (22), said harness lock plate (23) comprising an annular body (25) arranged at an opposite side to fitting grooves (28) for the respective socket portions (22) via a harness holding portion (26) and having a penetrating hole (24) of the same cross sectional shape as that of the axial hole (21) of the knob cover (2),
totally inserting said harness lock plate (23) holding said socket portion (22) inside said axial hole (21) and fixing same thereto,
providing a knob (1) onto which at least one wire terminal (11) is attached, the wire terminal (11) being exposed to an outside thereof, and
attaching the knob (1) onto the shift lever main body (20) to cover the socket portion (22) of the knob cover (2) and to engage the terminal (11) with the socket portion (22).

## Patentansprüche

1. Schalthebel für ein automatisches Getriebe, aufweisend:
einen Schalthebelhauptkörper (20), durchgedrungen durch eine Gleitplatte (33) und der eine Knaufabdeckung (2), durchdrungen durch die Gleitplatte (33), enthält, wobei die Knaufabdeckung (2) einen Sockelabschnitt (22), freigelegt nach außen der Knaufabdeckung (2), enthält, und
einen Knauf (1), auf dem zumindest ein Kabelanschluss (11) befestigt ist, wobei der Kabelanschluss (11) mit dem Sockelabschnitt (22) im Eingriff ist und nach außen desselben freigelegt ist, der Knauf (1) auf dem Schalthebelhauptkörper (20) befestigt ist, um den Sockelabschnitt (22) der Knaufabdeckung (2) abzudecken, wobei
die Knaufabdeckung (2) mit einer axialen Bohrung (21) versehen ist, durch die der Schalthebelhauptkörper (20) in das Innere der Knaufabdeckung (2) eingesetzt wird, eine Kabelbaumverriegelungsplatte (23), um den Sockelabschnitt (22) zu halten, der vollständig in die axiale Bohrung (21) eingesetzt und befestigt ist, wobei die Kabelbaumverriegelungsplatte (23) einen ringförmigen Körper (25) aufweist, angeordnet auf einer zu den Einsetznuten (28) gegenüberliegenden Seite für den jeweiligen Sockelabschnitt (22) über einen Kabelbaumhalteabschnitt (26) und der eine Durchdringungsbohrung (24) derselben Querschnittsform wie die der axialen Bohrung (21) der Knaufabdeckung (2) hat, durch die der Schalthebelhauptkörper (20) durchdrungen wird.

2. Schalthebel für ein automatisches Getriebe nach Anspruch 1, **dadurch gekennzeichnet, dass** der Sockelabschnitt (22) in eine obere Richtung in Bezug auf die Knaufabdeckung (2) freigelegt ist und ein freies Ende des Kabelanschlusses (11) von dem Knauf (1) vorspringt, um mit dem Sockelabschnitt (22) der Knaufabdeckung (2) im Eingriff zu sein.

3. Schalthebel für ein automatisches Getriebe nach jedem von Anspruch 1 oder 2, **dadurch gekennzeichnet, dass** der Sockelabschnitt (22) ein Mehrzahl von Sockelabschnitten (22) aufweist und der Kabelanschluss (11) dieselbe Anzahl Kabelanschlüsse (11) wie der Sockelabschnitt (22) aufweist.

4. Schalthebel für ein automatisches Getriebe nach einem von Anspruch 1 bis 3, **dadurch gekennzeichnet, dass** der ringförmige Körper (25) entlang eines Umfangs der axialen Bohrung (21) der Knaufabdeckung (2) gebildet ist.

5. Schalthebel für ein automatisches Getriebe nach Anspruch 3 oder 4, **dadurch gekennzeichnet, dass** die Anschläge (29) auf den Grenzen zwischen den jeweiligen Sockelabschnitten (22) verbunden sind und die Kabelabschnitte (27) mit den jeweiligen Sockelabschnitten (22) und auf dem Kabelbaumhalteabschnitt (26) verbunden sind.

6. Schalthebel für ein automatisches Getriebe nach einem der Ansprüche 3 bis 5, **dadurch gekennzeichnet, dass** der Knauf (1) einen Rahmen (3) mit einem konvexen Eingriffsabschnitt (10) aufweist, auf dem eine Mehrzahl von Bohrungen, gebildet an einer Rippe (3a) und durch die eine Mehrzahl von Kabelanschlüssen (11) eingesetzt ist, wobei die jeweiligen Kabelanschlüsse die einen Enden haben, verbunden mit Anschlüssen (9) eines Schnellschalters (8) und die die anderen Enden, eingesetzt in die jeweiligen Sockelabschnitte (22), verbunden auf den Einsetznuten (28) des Kabelbaumhalteabschnittes (26), haben.

7. Schalthebel für ein automatisches Getriebe nach Anspruch 6, **dadurch gekennzeichnet, dass** der konvexe Eingriffsabschnitt (10) von der Öffnung (17) eines Überzugskörpers (13) des Knaufs (1) vorspringt, wenn die jeweiligen Kabelanschlüsse (11), erstreckt entlang der jeweiligen Nuten (3b), gebildet an dem Rahmen (3), in die jeweiligen Sockelabschnitte (22), eingesetzt in die jeweiligen Einsetznuten (28), eingesetzt werden.

8. Schalthebel für ein automatisches Getriebe nach Anspruch 7, **dadurch gekennzeichnet, dass** der Rahmen (3) des Knaufs (1) einen Hohlraumabschnitt aufweist, wobei eine Seite desselben geschlossen ist, in den eine Feder (4), ein Knaufknopf (5), um mit einer Druckstange (34) des Schalthebelhauptkörpers (20) im Eingriff zu sein, und eine Knopfkappe (6) eingesetzt sind, die andere Seite des Hohlraumabschnittes mit einem Endstück (7) geschlossen ist.

9. Verfahren, anwendbar auf einen Schalthebel für ein automatisches Getriebe, aufweisend:
Schaffen eines Schalthebelhauptkörpers (20), durchgedrungen durch eine Gleitplatte (33) und eine Knaufabdeckung (2), durchgedrungen durch eine Gleitplatte (33), enthaltend, wobei die Knaufabdeckung (2) einen Sockelabschnitt (22), freigelegt nach außen der Knaufabdeckung (2), und eine axiale Bohrung (21) enthält; Schaffen einer Kabelbaumverriegelungsplatte (23), um den Sockelabschnitt (22) zu halten, wobei die Kabelbaumverriegelungsplatte (23) einen ringförmigen Körper (25) aufweist, angeordnet an einer gegenüberliegenden Seite der Eingriffsnuten (28) für die jeweiligen Sockelabschnitte (22) über einen Kabelbaumhalteabschnitt (26) und die eine Durchgangsbohrung (24) derselben Querschnittsform wie die der axialen Bohrung (21) der Knaufabdeckung (2) aufweist, vollständiges Einsetzen der Kabelbaumverriegelungsplatte (23), die den Sockelabschnitt (22) innerhalb der axialen Bohrung (21) hält und denselben daran befestigt,
Schaffen eines Knaufs (1), auf dem zumindest ein Kabelanschluss (11) verbunden ist, wobei der Kabelanschluss (11) nach außen desselben freigelegt ist, und
Befestigen des Knaufs (1) auf dem Schalthebelhauptkörper (20), um den Sockelabschnitt (22) der Knaufabdeckung (2) abzudecken und den Anschluss (11) mit dem Sockelabschnitt (22) in Eingriff zu bringen.

## Revendications

1. Levier de changement de vitesse pour une transmission automatique, comprenant:
un corps principal de levier de changement de vitesse (20) qui pénètre à travers une plaque coulissante (33) et comprenant un couvercle de bouton (2) qui pénètre à travers la plaque coulissante (33), le couvercle de bouton (2) comprenant une partie de douille (22) exposée à un extérieur du couvercle de bouton (2), et
un bouton (1) sur lequel au moins une borne de fil (11) est fixée, la borne de fil (11) étant mise en prise avec la partie de douille (22) et étant exposée à son extérieur, le bouton (11) étant fixé sur le corps principal de levier de changement de vitesse (20) pour recouvrir la partie de douille (22) du couvercle de bouton (2), dans lequel:
le couvercle de bouton (2) est prévu avec un trou axial (21) à travers lequel le corps principal du levier de changement de vitesse (20) est inséré dans l'intérieur du couvercle de bouton (2), une plaque de verrouillage de faisceau de fils (23) pour maintenir la partie de douille (22) étant totalement insérée et fixée dans ledit trou axial (21),
la plaque de verrouillage de faisceau de fils (23) comprenant un corps annulaire (25) agencé au niveau d'un côté opposé sur des rainures de montage (28) pour les parties de douille (22) respectives via une partie de maintien de faisceau de fils (26) et ayant un trou de pénétration (24) de la même forme transversale que celle du trou axial (21) du couvercle de bouton (2) à travers lequel le corps principal de levier de changement de vitesse (20) pénètre.

2. Levier de changement de vitesse pour une transmission automatique selon la revendication 1, **caractérisé en ce que** la partie de douille (22) est exposée dans une direction supérieure par rapport au couvercle de bouton (2) et une extrémité libre de la borne de fil (11) fait saillie à partir du bouton (1) pour se mettre en prise avec la partie de douille (22) du couvercle de bouton (2).

3. Levier de changement de vitesse pour une transmission automatique selon la revendication 1 ou 2, **caractérisé en ce que** la partie de douille (22) comprend une pluralité de parties de douille (22) et la borne de fil (11) comprend le même nombre de bornes de fil (11) que les parties de douille (22).

4. Levier de changement de vitesse pour une transmission automatique selon l'une des revendications 1 à 3, **caractérisé en ce que** le corps annulaire (25) est formé le long d'une périphérie du trou axial (21) du couvercle de bouton (2).

5. Levier de changement de vitesse pour une transmission automatique selon la revendication 3 ou 4, **caractérisé en ce que** des butées (29) sont fixées sur des limites entre les parties de douille (22) respectives et les parties de faisceau de fils (27) raccordées aux parties de douille (22) respectives et sur la partie de maintien de faisceau de fils (26).

6. Levier de changement de vitesse pour une transmission automatique selon l'une des revendications 3 à 5, **caractérisé en ce que** le bouton (1) comprend un châssis (3) ayant une partie de mise en prise convexe (10) sur laquelle une pluralité de trous formés sur une nervure (3a) et à travers lesquels une pluralité de bornes de fil (11) est insérée, les bornes de fil respectives ayant des extrémités raccordées aux bornes (9) d'un commutateur de vitesse surmultipliée (8) et ayant les autres extrémités insérées dans les parties de douille (22) respectives fixées sur les rainures de montage (28) de la partie de maintien de faisceau de fils (26).

7. Levier de changement de vitesse pour une transmission automatique selon la revendication 6, **caractérisé en ce que** la partie de mise en prise convexe (10) fait saillie à partir d'une ouverture (17) d'un corps de revêtement (13) du bouton (1) lorsque les bornes de fil (11) respectives étendues le long des rainures (3b) respectives formées sur le châssis (3) sont insérées dans les parties de douille (22) respectives montées dans les rainures de montage (28) respectives.

8. Levier de changement de vitesse pour une transmission automatique selon la revendication 7, **caractérisé en ce que** le châssis (3) du bouton (1) comprend une partie de cavité, dont son côté est fermé, dans lequel un ressort (4), un bouton (5) à mettre en prise avec une tige de compression (34) du corps principal de levier de changement de vitesse (20) et un capuchon de bouton (6) sont insérés, l'autre côté de la partie de cavité étant fermé avec un finisseur (7).

9. Procédé applicable à un levier de changement de vitesse pour une transmission automatique, comprenant les étapes consistant à:
prévoir un corps principal de levier de changement de vitesse (20) qui pénètre à travers une plaque coulissante (33) et comprenant un couvercle de bouton (2) qui pénètre à travers la plaque coulissante (33), le couvercle de bouton (2) comprenant une partie de douille (22) exposée à un extérieur du couvercle de bouton (2) et un trou axial (21);
prévoir une plaque de verrouillage de faisceau de fils (23) pour maintenir la partie de douille (22), ladite plaque de verrouillage de faisceau de fils (23) comprenant un corps annulaire (25) agencé au niveau d'un côté opposé sur des rainures de montage (28) pour les parties de douille (22) respectives, via une partie de maintien de faisceau de fils (26) et ayant un trou de pénétration (24) ayant la même forme transversale que celle du trou axial (21) du couvercle de bouton (2),
insérer totalement la plaque de verrouillage de faisceau de fils (23) maintenant ladite partie de douille (22) à l'intérieur dudit trou axial (21) et fixer cette dernière sur celui-ci,
prévoir un bouton (1) sur lequel au moins une borne de fil (11) est fixée, la borne de fil (11) étant exposée à son extérieur, et
fixer le bouton (1) sur le corps principal de levier de changement de vitesse (20) pour recouvrir la partie de douille (22) du couvercle de bouton (2) et pour mettre en prise la borne (11) avec la partie de douille (22).
